(19) Europäisches Patentamt
European Patent Office
Office européen des brevets

(11) EP 0 741 145 B1

(12) EUROPEAN PATENT SPECIFICATION

(45) Date of publication and mention of the grant of the patent:
**29.12.1999 Bulletin 1999/52**

(51) Int Cl.[6]: **C08F 10/00**, C08F 4/64

(21) Application number: **96303099.4**

(22) Date of filing: **02.05.1996**

(54) **Olefin polymerization catalyst and process for producing polyolefin using the same**

Olefinpolymerisationkatalysator und Verfahren zur Herstellung von Polyolefinen unter Verwendung desselben

Catalyseur de polymérisation d'oléfines et procédé de préparation de polyoléfines utilisant celui-ci

(84) Designated Contracting States:
**BE DE FR GB IT NL**

(30) Priority: **02.05.1995 JP 10842095**

(43) Date of publication of application:
**06.11.1996 Bulletin 1996/45**

(73) Proprietor: **SUMITOMO CHEMICAL COMPANY LIMITED**
**Osaka-shi, Osaka 541-0041 (JP)**

(72) Inventors:
- **Katayama, Hiroaki**
  **Ichihara-shi, Chiba-ken (JP)**
- **Watanabe, Tsuyoshi**
  **Ichihara-shi, Chiba-ken (JP)**
- **Imai, Akio**
  **Ichihara-shi, Chiba-ken (JP)**

(74) Representative: **Woods, Geoffrey Corlett**
**J.A. KEMP & CO.**
**Gray's Inn**
**14 South Square**
**London WC1R 5LX (GB)**

(56) References cited:
**EP-A- 0 574 794**
**EP-A- 0 590 486**
**EP-A- 0 638 593**

EP 0 741 145 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a catalyst for polymerizing an olefin and a process for preparing a polyolefin. In particular, the present invention relates to a catalyst having a superior copolymerizability and a process for preparing a polyolefin having a proper molecular weight and a high content of comonomer, and particularly, a linear low density polyethylene obtained by using the catalyst of the invention.

Many reports have been published concerning a process for preparing a polyolefin with a metallocene catalyst. For example, in Japanese Patent Publication (Unexamined) No. Sho 58-19309(1983), a process for producing a polyolefin by using a metallocene catalyst and aluminoxane is disclosed. However, this method, namely, copolymerization of ethylene and an α-olefin performed with a system using bis(cyclopentadienyl) zirconium dichloride and methyl aluminoxane provides a polymer having a low molecular weight and a low content of α-olefin. In Japanese Patent Publication (Unexamined) No. Hei 1-502036(1989), it is disclosed that ethylene-α-olefin copolymerization by using a metallocene catalyst and a boron compound, for example, bis(pentamethyl cyclopentadienyl)dimethyl zirconium and tri(n-butyl)ammonium tetra(pentafluorophenyl) borate, is performed, but only a copolymer having a low molecular weight and a low content of α-olefin is obtained.

On the other hand, in Japanese Patent Publication (Unexamined) Hei No. 3-163088(1991), it is disclosed that ethylene-α-olefin copolymerization is performed by using (tert-butylamide)dimethyl(tetra methyl-$\eta^5$-cyclopentadienyl) silane titanium dichloride, but as a result, a polymer having a higher molecular weight than an ethylene-α-olefin copolymer prepared by the metallocene catalyst as described above is obtained. However, this is still insufficient. In Japanese Patent Publication (Unexamined) No. Hei 6-49120(1994), it is disclosed that ethylene-α-olefin copolymerization is performed by using bis(2,3,4,5-tetramethylphosphoryl) zirconium dichloride but a polymer having a low molecular weight, a broad molecular weight distribution and a high melting point is still provided. As described above, ethylene-α-olefin copolymers obtained by the use of a conventional metallocene catalyst have a low molecular weight.

EP-A-0 574 794 and EP-A-0 590 486 disclose transition metal compounds having a cyclopentadienyl group and a cyclic ligand comprising a phosphorus atom. EP-A-0 638 593 disclose similar compounds having a phosphorus or nitrogen atom in the cyclic ligand.

It is an object of the present invention to provide a catalyst giving an olefin polymer having a high molecular weight and a process for producing a polyolefin by using the same. The use of term "olefin polymer" herein indicates both a homopolymer or an olefin or a copolymer or an olefin with another olefin.

The present invention relates to a catalyst component comprising a compound (A) described as follows, a catalyst system comprising the compound (A) and a compound (B) or the compound (A), the compound (B) and a compound (C) as main components and a process for producing an olefin polymer by using these catalyst systems.

Compound (A): a transition metal compound represented by the general formula (1)

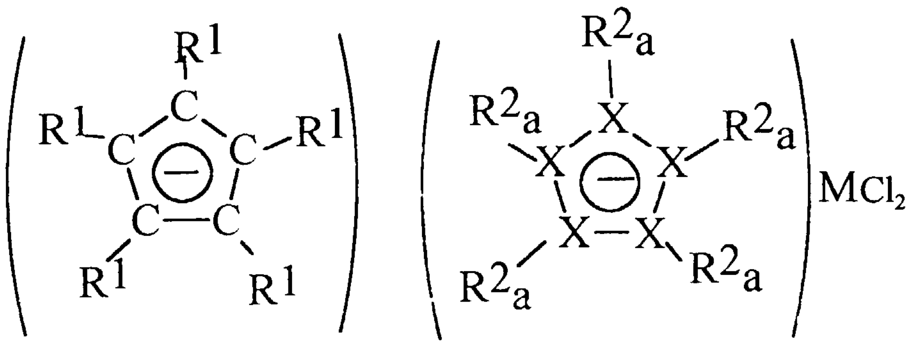

(1)

(wherein M represents a titanium or zirconium atom,

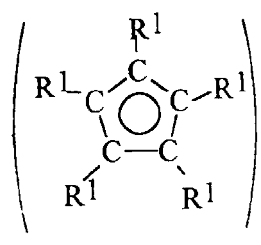

is cyclopentadienyl, methylenecyclopentadienyl, methylenetetramethylcyclopentadienyl, indenyl, methleneindenyl, ethylenecyclopentadienyl, ethylenetetramethylcyclopentadienyl, ethyleneindenyl, dimethylmethylenecyclopentadienyl, dimethylmethylenetetramethylcyclopentadienyl, dimethylmethyleneindenyl, pentamethylcyclopentadienyl, dimethylsilylenecyclopentadienyl, dimethylsilylenetetramethylcyclopentadienyl or dimethylsilyleneindenyl,

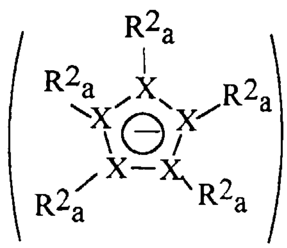

is pyrrolyl, methylpyrrolyl, dimethylpyrrolyl, trimethylpyrrolyl, tetramethylpyrrolyl, t-butylpyrrolyl, di-t-butylpyrrolyl, indolyl, methylindolyl, dimethylindolyl, t-butylindolyl or di-t-butylindolyl group);
provided that compound (A) is not (pentamethylcyclopentadienyl) (2, 5-dimethylpyrrolyl) zirconium dichloride or (pentamethylcyclopentadienyl) (2,5-di-t-butylpyrrolyl) zirconium dichloride.
(B) : an organoaluminum compound selected from the following compounds:

(B1): an organoaluminum compound represented by the general formula $R^3_bAlZ_{3-b}$
(B2): a cyclic aluminoxane (B2a) having a structure represented by the general formula $\{-Al(R^4)-O-\}_c$ and/or a linear aluminoxane (B2b) having a structure represented by the general formula $R^5\{-Al(R^5)-O-\}_dAlR^5_2$ wherein $R^3$, $R^4$ and $R^5$ represent a hydrocarbon group having 1 to 8 carbon atoms. In the above general formula, all of $R^4$ and all of $R^5$ may be the same or different. Z is a hydrogen and/or a halogen, b is a number satisfying $0<b\leqq3$, and c and d represent an integer of 1 or more.

(C) : a compound forming an ionic complex by reacting with a transition metal compound.

The present invention is further explained in detail as follows.
Figure 1 at the end of the description, is a flow chart drawing to aid the comprehension of the present invention and shows one of the representative embodiments of the present invention.

1) The transition metal catalyst component for polymerizing an olefin.

In the present invention, the compound (A) is the compound represented by the general formula (1) defined above.
Examples of the above-mentioned compound represented as the compound (A) include cyclopentadienyl pyrrolyl titanium dichloride, cyclopentadienyl methylpyrrolyl titanium dichloride, cyclopentadienyl dimethylpyrrolyl titanium dichloride, cyclopentadienyl tetramethylpyrrolyl titanium dichloride, cyclopentadienyl t-butylpyrrolyl titanium dichloride, cyclopentadienyl di-t-butylpyrrolyl titanium dichloride, pentamethylcyclopentadienyl pyrrolyl titanium dichloride, pentamethylcyclopentadienyl methylpyrrolyl titanium dichloride, pentamethylcyclopentadienyl dimethylpyrrolyl titanium dichlor-ide, pentamethylcyclopentadienyl tetramethylpyrrolyl titanium dichloride, pentamethylcyclopentadienyl t-butylpyrrolyl titanium dichloride, pentamethylcyclopentadienyl di-t-butylpyrrolyl titanium dichloride, indenyl pyrrolyl titanium dichloride, indenyl methylpyrrolyl titanium dichloride, indenyl dimethylpyrrolyl titanium dichloride, indenyl tetramethylpyrrolyl titanium dichloride, indenyl t-butylpyrrolyl titanium dichloride, indenyl di-t-butylpyrrolyl titanium dichloride, cyclopentadienyl indolyl titanium dichloride, cyclopentadienyl methylindolyl titanium dichloride, cyclopentadienyl dimethylindolyl titanium dichloride, cyclopentadienyl t-butylindolyl titanium dichloride, cyclopentadienyl di-t-butylindolyl titanium dichloride, pentamethylcyclopentadienyl indolyl titanium dichloride, pentamethylcyclopentadienyl methylindolyl titanium dichloride, pentamethylcyclopentadienyl dimethylindolyl titanium dichloride, pentamethylcyclopentadienyl t-butylindolyl titanium dichloride, pentamethylcyclopentadienyl di-t-butylindolyl titanium dichloride, indenyl indolyl titanium dichloride, indenyl methylindolyl titanium dichloride, indenyl dimethylindolyl titanium dichloride, indenyl t-butylindolyl titanium dichloride, indenyl di-t-butylindolyl titanium dichloride.
Such Examples also include methylenecyclopentadienyl pyrrolyl titanium dichloride, methylenecyclopentadienyl methylpyrrolyl titanium dichloride, methylenecyclopentadienyl dimethylpyrrolyl titanium dichloride, methylenecyclopentadienyl trimethylpyrrolyl titanium dichloride, methylenecyclopentadienyl t-butylpyrrolyl titanium dichloride, methylenecyclopentadienyl di-t-butylpyrrolyl titanium dichloride, methylenetetramethylcyclopentadienyl pyrrolyl titanium dichloride, methylenetetramethylcyclopentadienyl methylpyrrolyl titanium dichloride, methylenetetramethylcyclopentadienyl dimethylpyrrolyl titanium dichloride, methylenetetramethylcyclopentadienyl trimethylpyrrolyl titanium dichloride, methylenetetramethylcyclopentadienyl t-butylpyrrolyl titanium dichloride, methylenetetramethylcyclopentadienyl di-t-butylpyrrolyl titanium dichloride, methyleneindenyl pyrrolyl titanium dichloride, methyleneindenyl methylpyrrolyl titanium dichloride, methyleneindenyl dimethylpyrrolyl titanium dichloride, methyleneindenyl trimethylpyrrolyl titanium dichloride, methyleneindenyl t-butylpyrrolyl titanium dichloride, methyleneindenyl di-t-butylpyrrolyl titanium dichloride, methylenecyclopentadienyl indolyl titanium dichloride, methylenecyclopentadienyl methylindolyl titanium dichloride, methylenecyclopentadienyl dimethylindolyl titanium dichloride, methylenecyclopentadienyl t-butylindolyl titanium dichloride, methylenecyclopentadienyl di-t-butylindolyl titanium dichloride, methylenetetramethylcyclopentadienyl indolyl titanium dichloride, methylenetetramethylcyclopentadienyl methylindolyl titanium dichloride, methylenetetramethylcyclopentadienyl dimethylindolyl titanium dichloride, methylenetetramethylcyclopentadienyl t-butylindolyl titanium dichloride, methylenetetramethylcyclopentadienyl di-t-butylindolyl titanium dichloride, methyleneindenyl indolyl titanium dichloride, methyleneindenyl methylindolyl titanium dichloride, methyleneindenyl dimethylindolyl titanium dichloride, methyleneindenyl t-butylindolyl titanium dichloride, methyleneindenyl di-t-butylindolyl titanium dichloride.

Other examples are ethylenecyclopentadienyl pyrrolyl titanium dichloride, ethylenecyclopentadienyl methylpyrrolyl titanium dichloride, ethylenecyclopentadienyl dimethylpyrrolyl titanium dichloride, ethylenecyclopentadienyl trimethylpyrrolyl titanium dichloride, ethylenecyclopentadienyl t-butylpyrrolyl titanium dichloride, ethylenecyclopentadienyl di-t-butylpyrrolyl titanium dichloride, ethylenetetramethylcyclopentadienyl pyrrolyl titanium dichloride, ethylenetetramethylcyclopentadienyl methylpyrrolyl titanium dichloride, ethylenetetramethylcyclopentadienyl dimethylpyrrolyl titanium dichloride, ethylenetetramethylcyclopentadienyl trimethylpyrrolyl titanium dichloride, ethylenetetramethylcyclopentadienyl t-butylpyrrolyl titanium dichloride, ethylenetetramethylcyclopentadienyl di-t-butylpyrrolyl titanium dichloride, ethyleneindenyl pyrrolyl titanium dichloride, ethyleneindenyl methylpyrrolyl titanium dichloride, ethyleneindenyl dimethylpyrrolyl titanium dichloride, ethyleneindenyl trimethylpyrrolyl titanium dichloride, ethyleneindenyl t-butylpyrrolyl titanium dichloride, ethyleneindenyl di-t-butylpyrrolyl titanium dichloride, ethylenecyclopentadienyl indolyl titanium dichloride, ethylenecyclopentadienyl methylindolyl titanium dichloride, ethylenecyclopentadienyl dimethylindolyl titanium dichloride, ethylenecyclopentadienyl t-butylindolyl titanium dichloride, ethylenecyclopentadienyl di-t-butylindolyl titanium dichloride, ethylenetetramethylcyclopentadienyl indolyl titanium dichloride, ethylenetetramethylcyclopentadienyl methylindolyl titanium dichloride, ethylenetetramethylcyclopentadienyl dimethylindolyl titanium dichloride, ethylenetetramethylcyclopentadienyl t-butylindolyl titanium dichloride, ethylenetetramethylcyclopentadienyl di-t-butylindolyl titanium dichloride, ethyleneindenyl indolyl titanium dichloride, ethyleneindenyl methylindolyl titanium dichloride, ethyleneindenyl dimethylindolyl titanium dichloride, ethyleneindenyl t-butylindolyl titanium dichloride, ethyleneindenyl di-t-butylindolyl titanium dichloride.

Additional examples are dimethylmethylenecyclopentadienyl pyrrolyl titanium dichloride, dimethylmethylenecyclopentadienyl methylpyrrolyl titanium dichloride, dimethylmethylenecyclopentadienyl dimethylpyrrolyl titanium dichloride, dimethylmethylenecyclopentadienyl trimethylpyrrolyl titanium dichloride, dimethylmethylenecyclopentadienyl t-butylpyrrolyl titanium dichloride, dimethylmethylenecyclopentadienyl di-t-butylpyrrolyl titanium dichloride, dimethylmethylenetetramethylcyclopentadienyl pyrrolyl titanium dichloride, dimethylmethylenetetramethylcyclopentadienyl methylpyrrolyl titanium dichloride, dimethylmethylenetetramethylcyclopentadienyl dimethylpyrrolyl titanium dichloride, dimethylmethylenetetramethylcyclopentadienyl trimethylpyrrolyl titanium dichloride, dimethylmethylenetetramethylcyclopentadienyl t-butylpyrrolyl titanium dichloride, dimethylmethylenetetramethylcyclopentadienyl di-t-butylpyrrolyl titanium dichloride, dimethylmethyleneindenyl pyrrolyl titanium dichloride, dimethylmethyleneindenyl methylpyrrolyl titanium dichloride, dimethylmethyleneindenyl dimethylpyrrolyl titanium dichloride, dimethylmethyleneindenyl trimethylpyrrolyl titanium dichloride, dimethylmethyleneindenyl t-butylpyrrolyl titanium dichloride, dimethylmethyleneindenyl di-t-butylpyrrolyl titanium dichloride, dimethylmethylenecyclopentadienyl indolyl titanium dichloride, dimethylmethylenecyclopentadienyl methylindolyl titanium dichloride, dimethylmethylenecyclopentadienyl dimethylindolyl titanium dichloride, dimethylmethylenecyclopentadienyl t-butylindolyl titanium dichloride, dimethylmethylenecyclopentadienyl di-t-butylindolyl titanium dichloride, dimethylmethylenetetramethylcyclopentadienyl indolyl titanium dichloride, dimethylmethylenetetramethylcyclopentadienyl methylindolyl titanium dichloride, dimethylmethylenetetramethylcyclopentadienyl dimethylindolyl titanium dichloride, dimethylmethylenetetramethylcyclopentadienyl t-butylindolyl titanium dichloride, dimethylmethylenetetramethylcyclopentadienyl di-t-butylindolyl titanium dichloride, dimethylmethyleneindenyl indolyl titanium dichloride, dimethylmethyleneindenyl methylindolyl titanium dichloride, dimethylmethyleneindenyl dimethylindolyl titanium dichloride, dimethylmethyleneindenyl t-butylindolyl titanium dichloride, dimethylmethyleneindenyl di-t-butylindolyl titanium dichloride.

Other examples are dimethylsilylenecyclopentadienyl pyrrolyl titanium dichloride, dimethylsilylenecyclopentadienyl methylpyrrolyl titanium dichloride, dimethylsilylenecyclopentadienyl dimethylpyrrolyl titanium dichloride, dimethylsilylenecyclopentadienyl trimethylpyrrolyl titanium dichloride, dimethylsilylenecyclopentadienyl t-butylpyrrolyl

titanium dichloride, dimethylsilylenecyclopentadienyl di-t-butylpyrrolyl titanium dichloride, dimethylsilylenetetramethylcyclopentadienyl pyrrolyl titanium dichloride, dimethylsilylenetetramethylcyclopentadienyl methylpyrrolyl titanium dichloride, dimethylsilylenetetramethylcyclopentadienyl dimethylpyrrolyl titanium dichloride, dimethylsilylenetetramethylcyclopentadienyl trimethylpyrrolyl titanium dichloride, dimethylsilylenetetramethylcyclopentadienyl t-butylpyrrolyl titanium dichloride, dimethylsilylenetetramethylcyclopentadienyl di-t-butylpyrrolyl titanium dichloride, dimethylsilyleneindenyl pyrrolyl titanium dichloride, dimethylsilyleneindenyl methylpyrrolyl titanium dichloride, dimethylsilyleneindenyl dimethylpyrrolyl titanium dichloride, dimethylsilyleneindenyl trimethylpyrrolyl titanium dichloride, dimethylsilyleneindenyl t-butylpyrrolyl titanium dichloride, dimethylsilyleneindenyl di-t-butylpyrrolyl titanium dichloride, dimethylsilylenecyclopentadienyl indolyl titanium dichloride, dimethylsilylenecyclopentadienyl methylindolyl titanium dichloride, dimethylsilylenecyclopentadienyl dimethylindolyl titanium dichloride, dimethylsilylenecyclopentadienyl t-butylindolyl titanium dichloride, dimethylsilylenecyclopentadienyl di-t-butylindolyl titanium dichloride, dimethylsilylenetetramethylcyclopentadienyl indolyl titanium dichloride, dimethylsilylenetetramethylcyclopentadienyl methylindolyl titanium dichloride, dimethylsilylenetetramethylcyclopentadienyl dimethylindolyl titanium dichloride, dimethylsilylenetetramethylcyclopentadienyl t-butylindolyl titanium dichloride, dimethylsilylenetetramethylcyclopentadienyl di-t-butylindolyl titanium dichloride, dimethylsilyleneindenyl indolyl titanium dichloride, dimethylsilyleneindenyl methylindolyl titanium dichloride, dimethylsilyleneindenyl dimethylindolyl titanium dichloride, dimethylsilyleneindenyl t-butylindolyl titanium dichloride, dimethylsilyleneindenyl di-t-butylindolyl titanium dichloride.

Additional examples include cyclopentadienyl pyrrolyl zirconium dichloride, cyclopentadienyl methylpyrrolyl zirconium dichloride, cyclopentadienyl dimethylpyrrolyl zirconium dichloride, cyclopentadienyl tetramethylpyrrolyl zirconium dichloride, cyclopentadienyl t-butylpyrrolyl zirconium dichloride, cyclopentadienyl di-t-butylpyrrolyl zirconium dichloride. pentametnylcyclopentadienyl pyrrolyl zirconium dichloride, pentamethylcyclopentadienyl methylpyrrolyl zirconium dichloride, (other than the 2,5-dimethylpyrrolyl compound) pentamethylcyclopentadienyl tetramethylpyrrolyl zirconium dichloride, pentamethylcyclopentadienyl t-butylpyrrolyl zirconium dichloride, (other than the 2,5-di-t-butylpyrrolyl compound) indenyl pyrrolyl zirconium dichloride, indenyl methylpyrrolyl zirconium dichloride, indenyl dimethylpyrrolyl zirconium dichloride, indenyl tetramethylpyrrolyl zirconium dichloride, indenyl t-butylpyrrolyl zirconium dichloride, indenyl di-t-butylpyrrolyl zirconium dichloride, cyclopentadienyl indolyl zirconium dichloride, cyclopentadienyl methylindolyl zirconium dichloride, cyclopentadienyl dimethylindolyl zirconium dichloride, cyclopentadienyl t-butylindolyl zirconium dichloride, cyclopentadienyl di-t-butylindolyl zirconium dichloride, pentamethylcyclopentadienyl indolyl zirconium dichloride, pentamethylcyclopentadienyl methylindolyl zirconium dichloride, pentamethylcyclopentadienyl dimethylindolyl zirconium dichloride, pentamethylcyclopentadienyl t-butylindolyl zirconium dichloride, pentamethylcyclopentadienyl di-t-butylindolyl zirconium dichloride, indenyl indolyl zirconium dichloride, indenyl methylindolyl zirconium dichloride, indenyl dimethylindolyl zirconium dichloride, indenyl t-butylindolyl zirconium dichloride, indenyl di-t-butylindolyl zirconium dichloride.

Additional examples include methylenecyclopentadienyl pyrrolyl zirconium dichloride, methylenecyclopentadienyl methylpyrrolyl zirconium dichloride, methylenecyclopentadienyl dimethylpyrrolyl zirconium dichloride, methylenecyclopentadienyl trimethylpyrrolyl zirconium dichloride, methylenecyclopentadienyl t-butylpyrrolyl zirconium dichloride, methylenecyclopentadienyl di-t-butylpyrrolyl zirconium dichloride, methylenetetramethylcyclopentadienyl pyrrolyl zirconium dichloride, methylenetetramethylcyclopentadienyl methylpyrrolyl zirconium dichloride, methylenetetramethylcyclopentadienyl dimethylpyrrolyl zirconium dichloride, methylenetetramethylcyclopentadienyl trimethylpyrrolyl zirconium dichloride, methylenetetramethylcyclopentadienyl t-butylpyrrolyl zirconium dichloride, methylenetetramethylcyclopentadienyl di-t-butylpyrrolyl zirconium dichloride, methyleneindenyl pyrrolyl zirconium dichloride, methyleneindenyl methylpyrrolyl zirconium dichloride, methyleneindenyl dimethylpyrrolyl zirconium dichloride, methyleneindenyl trimethylpyrrolyl zirconium dichloride, methyleneindenyl t-butylpyrrolyl zirconium dichloride, methyleneindenyl di-t-butylpyrrolyl zirconium dichloride, methylenecyclopentadienyl indolyl zirconium dichloride, methylenecyclopentadienyl methylindolyl zirconium dichloride, methylenecyclopentadienyl dimethylindolyl zirconium dichloride, methylenecyclopentadienyl t-butylindolyl zirconium dichloride, methylenecyclopentadienyl di-t-butylindolyl zirconium dichloride, methylenetetramethylcyclopentadienyl indolyl zirconium dichloride, methylenetetramethylcyclopentadienyl methylindolyl zirconium dichloride, methylenetetramethylcyclopentadienyl dimethylindolyl zirconium dichloride, methylenetetramethylcyclopentadienyl t-butylindolyl zirconium dichloride, methylenetetramethylcyclopentadienyl di-t-butylindolyl zirconium dichloride, methyleneindenyl indolyl zirconium dichloride, methyleneindenyl methylindolyl zirconium dichloride, methyleneindenyl dimethylindolyl zirconium dichloride, methyleneindenyl t-butylindolyl zirconium dichloride, methyleneindenyl di-t-butylindolyl zirconium dichloride.

Other examples include ethylenecyclopentadienyl pyrrolyl zirconium dichloride, ethylenecyclopentadienyl methylpyrrolyl zirconium dichloride, ethylenecyclopentadienyl dimethylpyrrolyl zirconium dichloride, ethylenecyclopentadienyl trimethylpyrrolyl zirconium dichloride, ethylenecyclopentadienyl t-butylpyrrolyl zirconium dichloride, ethylenecyclopentadienyl di-t-butylpyrrolyl zirconium dichloride, ethylenetetramethylcyclopentadienyl pyrrolyl zirconium dichloride, ethylenetetramethylcyclopentadienyl methylpyrrolyl zirconium dichloride, ethylenetetramethylcyclopentadienyl dimethylpyrrolyl zirconium dichloride, ethylenetetramethylcyclopentadienyl trimethylpyrrolyl zirconium dichloride, ethylenetetramethylcyclopentadienyl t-butylpyrrolyl zirconium dichloride, ethylenetetramethylcyclopentadienyl di-t-butylpyrrolyl zirconium dichloride, ethyleneindenyl pyrrolyl zirconium dichloride, ethyleneindenyl methylpyrrolyl zirconium dichloride, ethyleneindenyl dimethylpyrrolyl zirconium dichloride, ethyleneindenyl trimethylpyrrolyl zirconium dichloride, ethyleneindenyl t-butylpyrrolyl zirconium dichloride, ethyleneindenyl di-t-butylpyrrolyl zirconium dichloride, ethylenecyclopentadienyl indolyl zirconium dichloride, ethylenecyclopentadienyl methylindolyl zirconium dichloride, ethylenecyclopentadienyl dimethylindolyl zirconium dichloride, ethylenecyclopentadienyl t-butylindolyl zirconium dichloride, ethylenecyclopentadienyl di-t-butylindolyl zirconium dichloride, ethylenetetramethylcyclopentadienyl indolyl zirconium dichloride, ethylenetetramethylcyclopentadienyl methylindolyl zirconium dichloride, ethylenetetramethylcyclopentadienyl dimethylindolyl zirconium dichloride, ethylenetetramethylcyclopentadienyl t-butylindolyl zirconium dichloride, ethylenetetramethylcyclopentadienyl di-t-butylindolyl zirconium dichloride, ethyleneindenyl indolyl zirconium dichloride, ethyleneindenyl methylindolyl zirconium dichloride, ethyleneindenyl dimethylindolyl zirconium dichloride, ethyleneindenyl t-butylindolyl zirconium dichloride, ethyleneindenyl di-t-butylindolyl zirconium dichloride.

Additional examples are dimethylmethylenecyclopentadienyl pyrrolyl zirconium dichloride, dimethylmethylenecyclopentadienyl methylpyrrolyl zirconium dichloride, dimethylmethylenecyclopentadienyl dimethylpyrrolyl zirconium dichloride, dimethylmethylenecyclopentadienyl trimethylpyrrolyl zirconium dichloride, dimethylmethylenecyclopentadienyl t-butylpyrrolyl zirconium dichloride, dimethylmethylenecyclopentadienyl di-t-butylpyrrolyl zirconium dichloride, dimethylmethylenetetramethylcyclopentadienyl pyrrolyl zirconium dichloride, dimethylmethylenetetramethylcyclopentadienyl methylpyrrolyl zirconium dichloride, dimethylmethylenetetramethylcyclopentadienyl dimethylpyrrolyl zirconium dichloride, dimethylmethylenetetramethylcyclopentadienyl trimethylpyrrolyl zirconium dichloride, dimethylmethylenetetramethylcyclopentadienyl t-butylpyrrolyl zirconium dichloride, dimethylmethylenetetramethylcyclopentadienyl di-t-butylpyrrolyl zirconium dichloride, dimethylmethyleneindenyl pyrrolyl zirconium dichloride, dimethylmethyleneindenyl methylpyrrolyl zirconium dichloride, dimethylmethyleneindenyl dimethylpyrrolyl zirconium dichloride, dimethylmethyleneindenyl trimethylpyrrolyl zirconium dichloride, dimethylmethyleneindenyl t-butylpyrrolyl zirconium dichloride, dimethylmethyleneindenyl di-t-butylpyrrolyl zirconium dichloride, dimethylmethylenecyclopentadienyl indolyl zirconium dichloride, dimethylmethylenecyclopentadienyl methylindolyl zirconium dichloride, dimethylmethylenecyclopentadienyl dimethylindolyl zirconium dichloride, dimethylmethylenecyclopentadienyl t-butylindolyl zirconium dichloride, dimethylmethylenecyclopentadienyl di-t-butylindolyl zirconium dichloride, dimethylmethylenetetramethylcyclopentadienyl indolyl zirconium dichloride, dimethylmethylenetetramethylcyclopentadienyl methylindolyl zirconium dichloride, dimethylmethylenetetramethylcyclopentadienyl dimethylindolyl zirconium dichloride, dimethylmethylenetetramethylcyclopentadienyl t-butylindolyl zirconium dichloride, dimethylmethylenetetramethylcyclopentadienyl di-t-butylindolyl zirconium dichloride, dimethylmethyleneindenyl indolyl zirconium dichloride, dimethylmethyleneindenyl methylindolyl zirconium dichloride, dimethylmethyleneindenyl dimethylindolyl zirconium dichloride, dimethylmethyleneindenyl t-butylindolyl zirconium dichloride, dimethylmethyleneindenyl di-t-butylindolyl zirconium dichloride.

Additional examples are dimethylsilylenecyclopentadienyl pyrrolyl zirconium dichloride, dimethylsilylenecyclopentadienyl methylpyrrolyl zirconium dichloride, dimethylsilylenecyclopentadienyl dimethylpyrrolyl zirconium dichloride, dimethylsilylenecyclopentadienyl trimethylpyrrolyl zirconium dichloride, dimethylsilylenecyclopentadienyl t-butylpyrrolyl zirconium dichloride, dimethylsilylenecyclopentadienyl di-t-butylpyrrolyl zirconium dichloride, dimethylsilylenetetramethylcyclopentadienyl pyrrolyl zirconium dichloride, dimethylsilylenetetramethylcyclopentadienyl methylpyrrolyl zirconium dichloride, dimethylsilylenetetramethylcyclopentadienyl dimethylpyrrolyl zirconium dichloride, dimethylsilylenetetramethylcyclopentadienyl trimethylpyrrolyl zirconium dichloride, dimethylsilylenetetramethylcyclopentadienyl t-butylpyrrolyl zirconium dichloride, dimethylsilylenetetramethylcyclopentadienyl di-t-butylpyrrolyl zirconium dichloride, dimethylsilyleneindenyl pyrrolyl zirconium dichloride, dimethylsilyleneindenyl methylpyrrolyl zirconium dichloride, dimethylsilyleneindenyl dimethylpyrrolyl zirconium dichloride, dimethylsilyleneindenyl trimethylpyrrolyl zirconium dichloride, dimethylsilyleneindenyl t-butylpyrrolyl zirconium dichloride, dimethylsilyleneindenyl di-t-butylpyrrolyl zirconium dichloride, dimethylsilylenecyclopentadienyl indolyl zirconium dichloride, dimethylsilylenecyclopentadienyl methylindolyl zirconium dichloride, dimethylsilylenecyclopentadienyl dimethylindolyl zirconium dichloride, dimethylsilylenecyclopentadienyl t-butylindolyl zirconium dichloride, dimethylsilylenecyclopentadienyl di-t-butylindolyl zirconium dichloride, dimethylsilylenetetramethylcyclopentadienyl indolyl zirconium dichloride, dimethylsilylenetetramethylcyclopentadienyl methylindolyl zirconium dichloride, dimethylsilylenetetramethylcyclopentadienyl dimethylindolyl zirconium dichloride, dimethylsilylenetetramethylcyclopentadienyl t-butylindolyl zirconium dichloride, dimethylsilylenetetramethylcyclopentadienyl di-t-butylindolyl zirconium dichloride, dimethylsilyleneindenyl indolyl zirconium dichloride, dimethylsilyleneindenyl methylindolyl zirconium dichloride, dimethylsilyleneindenyl dimethylindolyl zirconium dichloride, dimethylsilyleneindenyl t-butylindolyl zirconium dichloride, dimethylsilyleneindenyl di-t-butylindolyl zirconium dichloride.

2) The catalyst system for polymerizing an olefin.

As the organoaluminum compound (B) constituting the catalyst system for polymerizing an olefin with the above-mentioned transition metal compound (A) in the present invention, a well-known organoaluminum compound can be used. As an example, the organoaluminum compound (B1) indicated by the general formula $R^3{}_bAlZ_{3-b}$ and the cyclic aluminoxane (B2a) having a structure indicated by the general formula $\{-Al(R^4)-O-\}_c$ and/or a linear aluminoxane (B2b) having a structure indicated by the general formula $R^5\{-Al(R^5)-O-\}_d\ AlR^5{}_2$ , wherein $R^3$, $R^4$ and $R^5$ represent a hydrocarbon group having 1 to 8 carbon atoms, all of $R^4$ and all of $R^5$ may be the same or different, Z is a hydrogen and/or a halogen, b is a number satisfying $0 < b \leqq 3$, and c and d represent an integer of 1 or more, can be exemplified.

Examples of the organoaluminum compound (B1) indicated by the general formula $R^3{}_bAlZ_{3-b}$ include a trialkylaluminum such as trimethylaluminum, triethylaluminum, tri-n-propylaluminum, triisobutylaluminum, tri-n-hexylaluminum and the like; a dialkylaluminum chloride such as dimethylaluminum chloride, diethylaluminum chloride, di-n-propylaluminum chloride, diisobutylaluminum chloride, di-n-hexylaluminum chloride and the like; an alkylaluminum dichloride such as methylaluminum dichloride, ethylaluminum dichloride, n-propylaluminum dichloride, isobutylaluminum dichloride, n-hexylaluminum dichloride and the like; a dialkylaluminum hydride such as dimethylaluminum hydride, diethylaluminum hydride, di(n-propyl)aluminum hydride, diisobutylaluminum hydride, di(n-hexyl)aluminum hydride and the like. Trialkylaluminum is preferred, trialkylaluminum having one or more branched alkyl group is more preferred and triisobutylaluminum is most preferred.

Next, examples of $R^4$ and $R^5$ in the cyclic aluminoxane (B2a) having a structure indicated by the general formula $\{-Al(R^4)-O-\}_c$ and/or a linear aluminoxane (B2b) having a structure indicated by the general formula $R^5\{-Al(R^5)-O-\}_d\ AlR^5{}_2$ include an alkyl group such as methyl, ethyl, n-propyl, isopropyl, n-butyl, isobutyl, n-pentyl, neopentyl or the like. c and d are integers of 1 or more. An integer of 1 to 40 is preferred. More preferably, $R^4$ and $R^5$ are methyl or isobutyl and c and d are 3 to 20. As the above-mentioned aluminoxane, methylaluminoxane is specifically preferred.
The above-mentioned aluminoxane can be prepared with various methods, including those well known in the art. For example, the aluminoxane can be prepared by contacting a solution of trialkylaluminum (for example, trimethylaluminum) in a suitable organic solvent (benzene, aliphatic hydrocarbon and the like) with water.

As an another method, there is a method preparing it by contacting a trialkylaluminum (for example, trimethylaluminum and the like) with a crystallized hydrate of a metal salt (for example, a hydrate of cupric sulfate ).

In the present invention, in addition to the compound (A) and the compound (B), the catalyst system containing the compound (C) forming an ionic complex by reacting with the transition metal compound can be used.

As the compound (C), any compound forming an ionic complex by reacting with a transition metal compound formed by reacting the compound (A) and the compound (B) can be used.
Preferably, it is a Lewis acid which can turn the transition metal compound into a cation and become a non-coordinating anion corresponding to it or a compound represented by the general formula $C^+A^-$( wherein $C^+$ is a cationic oxidizing agent by which the transition metal can be oxidized to become a cation and $A^-$ is a non-coordinating anion corresponding to it) or a compound represented by the general formula $(L-H)^+A^-$ ( wherein L is a neutral Lewis base, $(L-H)^+$ is a Brönsted acid by which the transition metal can be oxidized to be a cation and $A^-$ is a non-coordinating anion corresponding to it).

Preferably, the Lewis acid which can turn the transition metal compound into a cation and become a non-coordinating anion corresponding to it, a compound represented by the general formula $C^+A^-$ or a compound represented by the general formula $(L-H)^+A^-$ is a case of a boron compound.
More preferably, it is a boron compound forming an ionic complex by reacting with a transition metal compound wherein the above-mentioned Lewis acid is represented by the general formula $BQ_1Q_2Q_3$, the compound represented by the general formula $C^+A^-$ is represented by the formula $C^+(BQ_1Q_2Q_3Q_4)^-$, and the compound represented by the general formula $(L-H)^+A^-$ is represented by the formula $(L-H)^+(BQ_1Q_2Q_3Q_4)^-$, wherein B is boron having tri-valent state, $Q_1$, $Q_2$, $Q_3$ and $Q_4$ are a halogen atom, a hydrocarbon group having 1 to 20 carbon atoms, a halogenated hydrocarbon group having 1 to 20 carbon atoms, a silyl group having 1 to 20 carbon atoms, an alkoxy group having 1 to 20 carbon atoms, or an amide group having 1 to 20 carbon atoms, and $Q_1$, $Q_2$, $Q_3$ and $Q_4$ may be same or different.

The example of the Lewis acid which can turn the transition metal compound into a cation and become a non-coordinating anion responded to it includes tris(pentafluorophenyl)borane, tris(2,3,5,6- tetrafluorophenyl)borane, tris (2,3,4,5-tetrafluorophenyl)borane, tris(3,4,5-trifluorophenyl)borane, tris(2,3,4-trifluorophenyl)borane, phenylbis(pentafluorophenyl)borane and the like.
Tris(pentafluorophenyl)borane is preferred.

Besides, as the example of the compound represented by the general formula $C^+(BQ_1Q_2Q_3Q_4)^-$ , the $C^+$ being a cationic oxidizing agent includes a ferrocenium cation, an alkyl-substituted ferrocenium cation, a silver cation, a triphenylmethyl cation and the like, and the $(BQ_1Q_2Q_3Q_4)^-$ being a non-coordinating anion includes tetrakis(pentafluorophenyl)borate, tetrakis (2,3,5,6-tetraflu orophenyl)borate, tetrakis(2,3,4,5-tetra fluorophenyl)borate, tetrakis(3,4,5-trifluorophenyl)borate, tetrakis(2,3,4-trifluorophenyl)borate, phenyltris(pentafluorophenyl)borate, tetrakis(3,5-bistrifluoromethylphenyl)borate and the like. These concrete combinations include ferrocenium tetrakis(pentafluorophenyl)borate, 1,1'-dimethylferrocenium tetrakis(pentafluorophenyl)borate, silver tetrakis(pentafluorophenyl)borate, triphenylmethyl tetrakis(pentafluorophenyl)borate, triphenylmethyl tetrakis(3,5-bis trifluoromethyl phenyl)borate and the like, and triphenylmethyl tetrakis(pentafluorophenyl)borate is preferred.

As the example of the compound represented by the general formula $(L\text{-}H)^+(BQ_1Q_2Q_3Q_4)^-$, $(L\text{-}H)^+$ being a Brönsted acid includes trialkylammonium, N,N-dialkylanilinium, dialkylammonium, triarylphosphonium and the like and the $(BQ_1Q_2Q_3Q_4)^-$ being a non-coordinating anion includes the same described above. The example of these combinations includes triethylammonium tetrakis(pentafluorophenyl)borate, tri(n-propyl)ammonium tetrakis(pentafluorophenyl)borate, tri(n-butyl)ammonium tetrakis(pentafluorophenyl)borate, tri(n-butyl)ammonium tetrakis(3,5-bistrifluoromethylphenyl) borate, N,N-dimethylanilinium tetrakis(pentafluorophenyl)borate, N,N-diethylanilinium tetrakis(pentafluorophenyl)borate, N,N-2,4,6-pentamethylanilinlum tetrakis(pentafluorophenyl) borate, N,N-dimethylanilinium tetrakis(3,5-bistrifluoromethylphenyl) borate, diisopropylammonium tetrakis(pentafluorophenyl)borate, dicyclohexylammonium tetrakis(pentafluorophenyl)borate, triphenylphosphonium tetrakis(pentafluorophenyl)borate, tri(methylphenyl) phosphonium tetrakis(pentafluorophenyl) borate, tri(dimethylphenyl)phosphonium tetrakis(pentafluorophenyl) borate and the like. Tri(n-butyl)ammonium tetrakis(pentafluorophenyl)borate or N,N-dimethylanilinium tetrakis(pentafluorophenyl)borate is preferred.

3) The process for producing an olefin polymer

In the present invention, as the polymerization catalyst, (1) the above-mentioned compound (A) and the compound (B) or the compound (A), the compound (B) and the compound (C) may be fed into a polymerization vessel with an arbitrary order, or (2) the reacted matter obtained by contacting the above-mentioned compound (A) and the compound (B) or the compound (A), the compound (B) and the compound (C) in advance may be used.

It is desirable to use each component in order that concerning the amount used of each catalyst component in the method mentioned above, the compound (A) may be 0.0001-10 mmol/l per the capacity of the polymerization vessel, and preferably 0.001-1 mmol/l, the compound (B) at Al atom conversion may be 0.01 to 1000 mmol/l and preferable 0.1-100mmol/l, the compound (C) may be 0.0001 to 20 mmol/l and preferable 0.001 to 2mmol/l, the molar ratio of the compound (B)/the compound (A) may be 0.1 to 10000 and preferably 5 to 2000 , and the molar ratio of the compound (C)/the compound (A) may be 0.01 to 1000 and preferably 0.5 to 10.

In the present invention, the monomer constituting the olefin polymer is one or more of olefins, and an $\alpha$ -olefin is preferably used. The $\alpha$-olefin is the one having 2-10 carbon atoms and the example includes ethylene, propylene, butene-1, 4-methyl pentene-1, hexene-1, octene-1, vinyl cyclohexane and the like. However, the present invention should not be limited to the above-mentioned compound.

The polymerization method should not be limited. For example, a solvent polymerization or slurry polymerization using an aliphatic hydrocarbon such as butane, pentane, hexane, heptane, octane and the like, an aromatic hydrocarbon such as benzene, toluene and the like, or a halogenated hydrocarbon such as methylenechloride and the like as a solvent (liquid medium), a vapor phase polymerization in the gaseous monomer or the like is can be adopted and either of batchwise polymerization and continuous polymerization can be adopted.

A polymerization temperature can select the range of -50°C to 250°C, but, in particular, the range of -20°C to 100°C is preferred, and a polymerization pressure is preferably within the range of atmospheric pressure to 60 kg/ $cm^2$. A polymerization time is generally determined appropriately considering the kind of the polymer aimed and a reaction apparatus, and a range of 5 minutes to 20 hours can be taken.

In the present invention, a chain transfer agent such as hydrogen and the like in order to control a molecular weight of the polymer can be added.

EXAMPLE

The present invention is illustrated in detail according to Examples and Comparative Examples as follows, but the present invention is not limited thereto. Properties of the polymer in Examples were measured by the following methods.

$\alpha$-olefin content was determined with the characteristic absorption of ethylene and $\alpha$-olefin by using infrared spectrophotometer (IR-810 manufactured by Nippon Bunkou Industry Ltd.) and was represented as the number of short branched-chains per 1000 carbon atoms(SCB).

A molecular weight and a molecular weight distribution were determined by the following condition with gel permeation chromatograph (150, C manufactured by Waters Company Ltd.).

Column: TSK gel GMH-HT
Measurement temperature was settled at 145°C

Measurement concentration: 10mg/10ml-ODCB

An intrinsic viscosity [η] was measured with Ubbelohde type viscometer at 130°C in tetralin solution. The bigger is the value of intrinsic viscosity [η], the molecular weight of the olefin polymer is the bigger.
The structure of a complex and a ligand was confirmed with $^1$H-NMR measurement (R-1500 manufactured by Hitachi Ltd.) and elemental analysis (CHN-O rapid type manufactured by Elemental Company Ltd.).
A measurement apparatus of a melting point (MP-S3 manufactured by Yanaco Company Ltd.) was used for determining a melting point.

Example 1

(1) Synthesis of cyclopentadienyl tetramethylpyrrolyl zirconium dichloride

(1-1) Synthesis of 2,3,4,5-tetramethylpyrrole

After a 1 liter of four-necked flask equipped with a stirrer, a dropping funnel and a thermometer was substituted with argon, 31g(270mmol) of 3-methyl-2,4-pentanedione, 32g(490mmol) of zinc powder, 150ml of glacial acetic acid were fed and this slurry was kept at 60°C. A solution wherein 87 ml of glacial acetic acid was added to 25g(250mmol) of 2,3-butanedione-2-oxime, was transferred into the dropping funnel, and while regulating the temperature of flask at 60°C - 80°C, 280 ml of purified water was added after heating this slurry under refluxing for 1 hour. Steam was blown into this mixed solution, and steam distillation was performed. A white solid obtained was filtered and subsequently, it was washed 2 times by using 100 ml of purified water and successively, 2 times by using 15 ml of hexane and was dried under vacuum at 45°C. 10 g of a white solid of 2,3,4,5-tetramethylpyrrole(81mmol) was obtained.(Yield 33 %) $^1$H-NMR($C_6D_6$) data of this white solid was shown as follows. δ 2.044 (s, 6H), 1.956(s, 6H)
The melting point of this white solid was 115-11 8°C.

(1-2) Synthesis of 2,3,4,5-tetramethylpyrrolyl lithium salt

After a 100ml of four-necked flask equipped with a stirrer, a dropping funnel and a thermometer was substituted with argon, 0.66g (5.4mmol) of 2,3,4,5-tetramethylpyrrole, 30ml of diethyl ether were fed and this solution was kept at 5°C. 3.4ml(5.4mmol) of n-butyllithium(1.6 mol/l) diluted with hexane was dropped into the solution in the flask from the dropping funnel and was kept to be stirred for 1 hour at 5°C and for over night at room temperature. The slurry obtained was dried under vacuum and a white solid of 2,3,4,5-tetramethylpyrrolyl lithium salt was obtained.

(1-3) Synthesis of cyclopentadienyl tetramethylpyrrolyl zirconium dichloride

After a 100ml of four-necked flask equipped with a stirrer, a dropping funnel and a thermometer was substituted with argon, 1.3g (5.0mmol) of cyclopentadienyl zirconium trichloride and 20ml of toluene were fed and this was kept at -70°C. This slurry was added slowly over a cannula to a slurry wherein 30ml of toluene was added to the above-mentioned tetramethylpyrrolyl lithium salt(5.4mmol) to be kept at -70°C. This slurry was kept to be stirred and a temperature was elevated from -70°C to room temperature for over night. After elevating a temperature, a liquid was eliminated under vacuum and a solid was obtained. 30ml of pentane was added to this solid and a component soluble in pentane was extracted. By filtering the insoluble component, it was separated. By cooling the component soluble in pentane at -20°C, 120mg of a light-yellow cubic crystal of cyclopentadienyl tetramethylpyrrolyl zirconium dichloride was obtained.
Yield was 6.9%.
$^1$H-NMR ($C_6D_6$) data of this cubic crystall was shown as follows.
δ 6.214 (s, 5H), 1.995(s, 6H), 1.819(s, 6H)
The result of a simultaneous elemental analysis of C,H,N of this cubic crystal was shown as follows.
C: 44.3%, H: 5.0%, N: 4.0%
The melting point of this cubic crystal was 119-135°C.

(2) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at 6kg/cm$^2$, ethylene was fed and 5.0mmol of methylaluminoxane (MMAO type 3A manufactured by Toso-Akzo Company Ltd.) was cast in after the inner

system became stable. Successively, a solution wherein 5.0 μmol of cyclopetadienyl tetramethylpyrrolyl zirconium dichloride synthesized with the above-mentioned method was dissolved in 5ml of toluene was cast in. Polymerization was carried out for 60 minutes while regulating a temperature at 60°C. As a result of polymerization, ethylene-hexene-1 copolymer having a comonomer content(SCB) of 14.6, an intrinsic viscosity ([η]) of 2.56 (dl/g), a molecular weight (Mw) of 179000 and a molecular weight distribution(Mw/Mn) of 2.2 was prepared with a yield of $1.8\times10^6$g per 1 mol of zirconium and 1 hour.

Example 2

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at 6kg/cm$^2$, ethylene was fed and 1.0mmol of triisobutylaluminum was cast in after the inner system became stable. Successively, a solution wherein 5.0 μmol of cyclopetadienyl tetramethylpyrrolyl zirconium dichloride synthesized with the method illustrated in Example 1 (1) was dissolved in 5ml of toluene was cast into it and subsequently, 15 μmol of triphenylmethyl tetrakis(pentafluorophenyl) borate was cast in. Polymerization was carried out for 60 minutes while regulating a temperature at 60°C. As a result of polymerization, ethylene-hexene-1 copolymer having SCB of 13.0, [η] of 3.61(dl/g), Mw of 251000 and Mw/Mn of 2.8 was prepared with a yield of $1.1\times10^6$g per 1mol of zirconium and 1 hour.

Example 3

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at 6kg/cm$^2$, ethylene was fed and 1.0mmol of triisobutylaluminum was cast in after the inner system became stable. Successively, a solution wherein 5.0 μmol of cyclopetadienyl tetramethylpyrrolyl zirconium dichloride synthesized with the method illustrated in Example 1 (1) was dissolved in 5ml of toluene was cast in and 15 μmol of triphenylmethyl tetrakis(pentafluorophenyl)borate was cast in after 10 minutes. Polymerization was carried out for 60 minutes while regulating a temperature at 60°C.

As a result of polymerization, ethylene-hexene-1 copolymer having SCB of 24.9 and [η] of 3.17(dl/g) was produced with a yield of $1.4\times10^6$g per 1mol of zirconium and 1 hour.

Example 4

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at 6kg/cm$^2$, ethylene was fed and 1.0mmol of triisobutylaluminum was cast in after the inner system became stable. Successively, a solution wherein 5.0 μmol of cyclopetadienyl tetramethylpyrrolyl zirconium dichloride synthesized with the method illustrated in Example 1 (1) was dissolved in 5ml of toluene was cast in and 15 μmol of triphenylmethyl tetrakis(pentafluorophenyl)borate was cast into it after 30 minutes. Polymerization was performed for 60 minutes while regulating a temperature at 60°C.

As a result of polymerization, ethylene-hexene-1 copolymer having SCB of 25.4 and a high molecular weight insoluble even in tetralin at 130°C was produced with a yield of $1.3\times10^6$g per 1mol of zirconium and 1 hour.

Example 5

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and the reactor was elevated to 80°C. After temperature up, while regulating ethylene pressure at 6kg/cm$^2$, ethylene was fed and 1.0mmol of triisobutylaluminum was cast in after the inner system became stable. Successively, a solution wherein 5.0 μmol of cyclopetadienyl tetramethylpyrrolyl zirconium dichloride synthesized with the method illustrated in Example 1 (1) was dissolved

in 5ml of toluene was cast in and subsequently, 15 μmol of triphenylmethyl tetrakis(pentafluorophenyl)borate was cast in. Polymerization was performed for 60 minutes while regulating a temperature at 80°C.
As a result of polymerization, ethylene-hexene-1 copolymer having SCB of 13.1 and [η] of 2.35(dl/g) was prepared with a yield of $2.9\times10^6$g per 1mol of zirconium and 1 hour.

Example 6

(1) Synthesis of pentamethylcyclopentadienyl tetramethylpyrrolyl zirconium dichloride

After a 100ml of four-necked flask equipped with a stirrer, a dropping funnel and a thermometer was substituted with argon, 1.1g (3.3mmol) of pentamethylcyclopentadienyl zirconium trichloride and 10ml of toluene were fed and this slurry was kept at -70°C. Subsequently, this slurry was added slowly over a cannula to a slurry wherein 20ml of toluene was added to the tetramethylpyrrolyl lithium salt(3.3mmol) synthesized with the same method of Example 1(1-2) to be kept at -70°C. Under stirring of this slurry, a temperature was elevated from -70°C to room temperature for over night. After temperature up, a liquid was eliminated under vacuum and a solid was obtained. 30ml of pentane was added to this solid and a component soluble in pentane was extracted. By filtering the insoluble component, it was separated. By cooling the component soluble in pentane at -20°C, 240mg of a light-yellow cubic crystal of pentamethylcyclopentadienyl tetramethylpyrrolyl zirconium dichloride was obtained. Yield was 17%.
$^1$H-NMR ($C_6D_6$) data of this cubic crystall was shown as follows.
δ 2.034 (s, 15H), 1.956(s, 6H), 1.917(s, 6H)
The result of a simultaneous elemental analysis of C,H,N of this cubic crystal was shown as follows.
C: 51.4%, H: 6.6%, N: 3.3%
The melting point of this cubic crystal was 180 - 187°C.

(2) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at 6kg/cm$^2$, ethylene was fed and 0.6mmol of triisobutylaluminum was cast in after the inner system became stable. Successively, a solution wherein 3.0 μmol of pentamethylcyclopetadienyl tetramethylpyrrolyl zirconium dichloride synthesized with the method illustrated above was dissolved in 3ml of toluene was cast in and subsequently, 9.0 μmol of triphenylmethyl tetrakis(pentafluorophenyl)borate was cast in. Polymerization was performed for 60 minutes while regulating a temperature at 60°C.
As a result of polymerization, ethylene-hexene-1 copolymer having SCB of 13.4, [η] of 5.67(dl/g), Mw of 425000 and Mw/Mn of 3.5 was produced with a yield of $4.4\times10^6$g per 1mol of zirconium and 1 hour.

Example 7

(1) Copolymerization of ethylene with α-olefin

After an autoclave having an inner volume of 400 ml with a stirrer was dried under vacuum and substituted with argon, 170 ml of toluene as a solvent and 30ml of hexene-1 as the α-olefin were fed and a temperature of the reactor was elevated to 80°C. After temperature up, while regulating ethylene pressure at 6kg/cm$^2$, ethylene was fed and 0.6mmol of triisobutylaluminum was cast into after the inner system became stable. Successively, the solution wherein 3.0 μmol of pentamethylcyclopentadienyl tetramethylpyrrolyl zirconium dichloride synthesized with the method illustrated in Example 6 (1) was dissolved in 3ml of toluene was cast in and subsequently, 9.0 μmol of triphenylmethyl tetrakis(pentafluorophenyl)borate was cast in. Polymerization was performed for 60 minutes while regulating a temperature at 80°C.
As a result of polymerization, ethylene-hexene-1 copolymer having SCB of 14.1 and [η] of 3.16(dl/g) was produced with a yield of $3.6\times10^6$g per 1mol of zirconium and 1 hour.

Example 8

(1)Synthesis of ethylene(1-indenyl)(3-indolyl)zirconium dichloride

(1-1) Synthesis of indenyllithium salt

After a 500ml of four-necked flask equipped with a stirrer, a dropping funnel and a thermometer was substituted

with argon, 25g(220mmol) of indene and 200 ml of diethyl ether were fed and this slurry was kept at 5°C. Successively, 140ml (220mmol) of n-butyllithium (1.6mol/l) diluted with n-hexane was dropped into a solution in the flask for 160 minutes from the dropping funnel. This slurry was kept to be stirred for 1 hour at 5°C and for over night at room temperature. This slurry was filtered, a solid provided was washed 2 times by using 150 ml of hexane and was dried under vacuum. 24g of light yellow powder of indenyllithium salt was obtained. Yield was 89 %.

(1-2) Synthesis of 1-(3-indolyl)-2-(1-indenyl)ethane

After a 300ml of four-necked flask equipped with a stirrer, a dropping funnel and a thermometer was substituted with argon, 1.6g (7.3mmol) of 3-(2-bromoethyl)indole and 60ml of tetrahydrofuran were fed and this solution was kept at 5°C. A solution wherein 50ml of tetrahydrofuran was added to 2.8g(23mmol) of the indenyllithium salt synthesized as described above was dropped slowly into a solution in the flask for 160 minutes from the dropping funnel, and was kept to be stirred for 30 minutes at 5°C and for over night at room temperature. From the greenish solution, a liquid was removed under vacuum and an oil was obtained. To this oil, 80ml of toluene and 20ml of purified water were added and a toluene layer was taken out by a separating funnel.
Furthermore,
it was extracted with 80ml and 50ml of toluene and the toluene layer joined was washed with 50ml of purified water. The solvent of toluene layer obtained was concentrated under vacuum and 1.8g of a cream-colored crystal of 1-(3-indolyl)-2-(1-indenyl)ethane was obtained by cooling at -20°C.
$^1$H-NMR ($C_6D_6$) data of this crystal was shown as follows.
δ 7.698 (m, 2H), 7.200(m), 6.487(s, 1H), 6.077(s, 1H), 3.098(s, 4H), 2.151(s, 1H).

(1-3) Synthesis of 1-(3-indolyl)-2-(1-indenyl)ethanelithium salt

After a 500ml of four-necked flask equipped with a stirrer, a dropping funnel and a thermometer was substituted with argon, 2.2g(8.4mmol) of 1-(3-indolyl)-2-(1-indenyl)ethane and 250 ml of toluene were fed and this solution was kept at 5°C. Successively, 11ml (17mmol) of n-butyllithium (1.6mol/l) diluted with n-hexane was dropped into the solution in the flask for 10 minutes from the dropping funnel. This slurry was kept to be stirred for 1 hour at 5°C and for over night at room temperature. This slurry was filtered, a solid provided was washed with 30 ml of toluene and was dried under vacuum.
2.0g of light yellow powder of 1-(3-indolyl)-2-(1-indenyl) ethanelithium salt was obtained. Yield was 88 %.

(1-4) Synthesis of ethylene(1-indenyl)(3-indolyl) zirconium dichloride

After a 200ml of four-necked flask equipped with a stirrer, a dropping funnel and a thermometer was substituted with argon, 1.1g (4.1mmol) of 1-(3-indolyl)-2-(1-indenyl) ethanelithium salt and 50ml of tetrahydrofuran were fed and this slurry was kept at -70°C. Subsequently, a slurry wherein 30ml of tetrahydrofuran was added to 1.8g(4.8mmol) of a complex of zirconium tetrachloride with tetrahydrofuran and kept at -70°C was added slowly over a cannula to the slurry in the flask. This slurry was kept to be stirred and a temperature was elevated from -70°C to room temperature for over night. After temperature up, a liquid was removed under vacuum and a solid was obtained. 50ml of toluene was added to this solid and a component soluble in toluene was extracted to be filtered. 30ml of dichloromethane was added to a residue, a component soluble in dichloromethane was extracted and an insoluble part was separated by filtering. A liquid was removed from the component soluble in dichloromethane under vacuum and 30mg of an orange-colored solid of ethylene(1-indenyl)(3-indolyl) zirconium dichloride was obtained. Yield was 1.7%.
$^1$H-NMR ($C_6D_6$) data of this orange-colored solid was shown as follows.
δ 7.932(m), 7.288(m), 6.380(s), 3.802(br), 3.118(br), 2.171(s), 1.389(br).

(2) Copolymerization of ethylene with α-olefin

Polymerization was performed in like manner as Example 6(2) except changing pentamethylcyclopentadienyl tetramethylpyrrolyl zirconium dichloride to ethylene(1-indenyl)(3-indolyl) zirconium dichloride and changing a polymerization time to 10 minutes. As a result of polymerization, ethylene-hexene-1 copolymer having SCB of 22.7, [η] of 1.15(dl/g), Mw of 66000 and Mw/Mn of 3.8 was produced with a yield of $2.4 \times 10^7$g per 1mol of zirconium and 1 hour.

Example 9

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at $6kg/cm^2$, ethylene was fed and 0.3mmol of triisobutylaluminum was cast in after the inner system became stable. Successively, a solution wherein 1.0 μmol of ethylene (1-indenyl)(3-indolyl) zirconium dichloride synthesized with the method illustrated in Example 8(1) was dissolved in 2ml of toluene was cast in and subsequently, 3.0 μmol of triphenylmethyl tetrakis(pentafluorophenyl) borate was cast in. Polymerization was performed for 60 minutes while regulating a temperature at 60°C. As a result of polymerization, ethylene-hexene-1 copolymer having SCB of 12.8 and [η] of 1.84(dl/g) was produced with a yield of $7.7 \times 10^6$g per 1mol of zirconium and 1 hour.

Example 10

(1) Synthesis of ethylene(1-indenyl)(3-indolyl) titanium dichloride

After a 100ml of four-necked flask equipped with a stirrer, a dropping funnel and a thermometer was substituted with argon, 0.35g (1.3mmol) of 1-(3-indolyl)-2-(1-indenyl) ethanelithium salt and 20ml of toluene were fed and this slurry was kept at -70°C. Subsequently, a slurry wherein 20ml of toluene was added to 0.47g(1.4mmol) of a complex of titanium tetrachloride with tetrahydrofuran and kept at -70°C was added slowly over a cannula to the slurry in the flask. This slurry was kept to be stirred and a temperature was elevated from -70°C to room temperature for over night. After temperature up, a liquid was removed under vacuum and a solid was obtained. 30ml of dichloromethane was added to this solid and a component soluble in dichloromethane was extracted and an insoluble part was separated by filtering. By cooling the component soluble in dichloromethane at -20°C, 28mg of a black solid of ethylene(1-indenyl)(3-indolyl) titanium dichloride was obtained. Yield was 5.7%.
$^1$H-NMR ($C_6D_6$) data of this black crystal was shown as follows. δ 7.600(m), 6.438(m), 5.882(br), 3.889(br), 2.942(br), 2.161(s), 1.458(br).

(2) Copolymerization of ethylene with α-olefin

Polymerization was performed in like manner as Example 6(2) except changing pentamethylcyclopentadienyl tetramethylpyrrolyl zirconium dichloride to ethylene(1-indenyl)(3-indolyl) titanium dichloride and changing a polymerization time to 60 minutes. As a result of polymerization, ethylene-hexene-1 copolymer having SCB of 22.9, [η] of 2.45 (dl/g), Mw of 84000 and Mw/Mn of 2.6 was produced with a yield of $1.7 \times 10^6$g per 1mol of titanium and 1 hour.

Example 11

(1) Copolymerization of ethylene with α-olefin

Polymerization was performed in like manner as Example 7 except changing pentamethylcyclopentadienyl tetramethylpyrrolyl zirconium dichloride to ethylene(1-indenyl)(3-indolyl) titanium dichloride and changing a polymerization time to 60 minutes. As a result of polymerization, ethylene-hexene-1 copolymer having SCB of 22.2 and [η] of 1.62(dl/g) was prepared with a yield of $4.7 \times 10^5$g per lmol of titanium and 1 hour.

Comparative Example 1

(1) Copolymerization of ethylene with α-olefin

After an autoclave having an inner volume of 400 ml with a stirrer was dried under vacuum and substituted with argon, 170 ml of toluene as a solvent and 30ml of hexene-1 as α-olefin were fed and a temperature of the reactor was elevated to 60°C. After temperature up, while regulating ethylene pressure at $6kg/cm^2$, ethylene was fed and 0.5mmol of triisobutylaluminum was cast in after the inner system became stable. Successively, a solution wherein 2.5μmol of dicyclopentadienyl zirconium dichloride was dissolved in 3ml of toluene was cast in and subsequently, 7.5μmol of triphenylmethyl tetrakis(pentafluorophenyl)borate was cast in. Polymerization was performed for 60 minutes while regulating a temperature at 60°C.

As a result of polymerization, ethylene-hexene-1 copolymer having SCB of 19.9, [η] of 1.96(dl/g), Mw of

136000 and Mw/Mn of 2.1 was prepared with a yield of 1.6× $10^7$g per 1mol of zirconium and 1 hour.

Comparative Example 2

(1) Copolymerization of ethylene with α-olefin

After an autoclave having an inner volume of 400 ml with a stirrer was dried under vacuum and substituted with argon, 195 ml of toluene as a solvent and 5ml of hexene-1 as α-olefin were fed and a temperature of the reactor was elevated to 60°C. After temperature up, while regulating ethylene pressure at 6kg/$cm^2$, ethylene was fed and 0.25mmol of triisobutylaluminum was cast in after the inner system became stable. Successively, a solution wherein 0.7 μmol of ethylenebisindenyl zirconium dichloride was dissolved in 3ml of toluene was cast in and subsequently, 2.0 μmol of triphenylmethyl tetrakis(pentafluorophenyl)borate was cast in. Polymerization was performed for 30 minutes while regulating a temperature at 60°C. As a result of polymerization, ethylene-hexene-1 copolymer having SCB of 31.4 and [η] of 1.17(dl/g) was prepared with a yield of 4.9×$10^7$g per 1mol of zirconium and 1 hour.

Example 12

(1)Synthesis of cyclopentadienyl(2,5-di-tert-butylpyrrolyl) zirconium dichloride

(1-1)Synthesis of 2,2,7,7-tetramethyl-4,5-epoxyoctane-3,6-dione

Into a 2 liter of four-necked flask equipped with a stirrer and a thermometer, 30.3g(169mmol) of 1-bromopinacolone and 800 ml of diethyl ether were fed and this solution was kept at 20°C. Next, 25.8g(460mmol) of potassium hydroxide was added to the solution in the flask and the solution was stirred for 4 hours at a room temperature. Water of 700 ml at 5°C was added to thus reacted matter to divide into an organic layer and aqueous layer. Diethyl ether of 300ml was added to the aqueous layer and the liquid of aqueous layer was divided into an organic layer and an aqueous layer. The liquid of organic layer was mixed with the previously obtained liquid of organic layer and the solvent was removed from the mixed liquid under a reduced pressure at 80°C. 11.9g (56 mmol) of yellow solid of 2,2,7,7-tetramethyl-4,5-epoxyoctane-3,6-dione was obtained. Yield was 66 %.

(1-2) Synthesis of 2,2,7,7-tetramethyl-4-octene-3,6-dione

Into a 500ml of four-necked flask equipped with a stirrer and a reflux condenser, 11.9g (56mmol) of 2,2,7,7-tetramethyl-4,5-epoxyoctane-3,6-dione and 24.5g (148mmol) of potassium iodide were fed and 300ml of glacial acetic acid was added to these thereby obtaining a solution. After this solution was refluxed for 5 hours, 1500ml of water was added to the solution. Thus obtained solution was cooled to 5°C, and a precipitated solid was filtered. After the obtained solid was washed two times with 10ml of water, and was dissolved with 20ml of ethanol and was cooled to -20°C. After a crystal precipitated was filtered, the crystal was dried under a reduced pressure to obtain 2.7g (14 mmole) of yellow plate crystal of 2,2,7,7-tetramethyl-4-octene-3,6-dione. Yield was 24%.
$^1$H-NMR ($C_6D_6$) data of this yellow crystal was shown as follows.
δ 7.630 (s, 2H), 0.970(s,18H).

(1-3) Synthesis of 2,2,7,7-tetramethyloctane-3,6-dione

Into a 200ml of four-necked flask equipped with a stirrer and a thermometer, 4.0g (20mmol) of 2,2,7,7-tetramethyl-4-octene-3,6-dione and 90ml of glacial acetic acid was fed, and this solution was kept at 20°C. 3.2g (48 mmol) of zinc powder and 18 ml of water were added to this solution and this mixture was stirred over night at a room temperature to obtain a slurry. Pentane of 180 ml was added to this slurry to divide into an organic layer and an aqueous layer. Pentane of 40 ml was added to the separated aqueous liquid and was stirred, and an organic layer was separated. This organic liquid and the previously obtained organic liquid were mixed, and this liquid was washed 3 times with 135 ml of water, washed once with 135 ml of saturated sodium carbonate aqueous solution and then washed once with saturated sodium chloride aqueous solution, and was dried with 5 g of sodium sulfate for one hour. Sodium sulfate was filtered from the liquid, and a solvent was evaporated from the liquid under a reduced pressure. 3.2g (16 mmol) of a transparent oil of 2,2,7,7-tetramethyloctane-3,6-dione was obtained. Yield was 79%.
$^1$H-NMR ($C_6D_6$) data of this transparent oil was shown as follows.
δ 2.512 (s, 4H), 1.077(s,18H).

(1-4) Synthesis of 2,5-di-tert-butylpyrrole

Into a 100ml of four-necked flask equipped with a stirrer, a condenser and a thermometer, 0.6g (3.0mmol) of 2,2,7,7-tetramethyloctane-3,6-dione and 1.4g (18 mmol) of ammonium acetate were fed, and further, 35 ml of glacial acetic acid was added. This solution was refulxed for 6 hours. After cooling to a room temperature, 40 ml of pentane and 60 ml of water were added to the solution thereby to divide the solution into an organic layer and an aqueous layer. The liquid of organic layer was washed with 40 ml of water, and dried with sodium sulfate at -20°C for over night. Sodium sulfate was filtered from the liquid, and a solvent was removed by evaporating from the liquid under a reduced pressure. 0.4g (2.2 mmol) of yellow oil of 2,5-di-tert-butylpyrrole was obtained. Yield was 74%.
$^1$H-NMR ($C_6D_6$) data of this yellow oil was shown as follows.
$\delta$ 6.057(s, 1H), 6.009 (s, 1H), 1.223(s, 18H).

(1-5) Synthesis of 2,5-di-tert-butylpyrrolyl lithium salt

After a 200ml of four-necked flask equipped with a stirrer, a dropping funnel and a thermometer was substituted with argon, 3.7g (21mmol) of 2,5-di-tert-butylpyrrole, 100ml of hexane were fed and this solution was kept at 7°C. 14ml (23 mmol) of n-butyllithium(1.6 mol/l) diluted with hexane was dropped into the solution in the flask from the dropping funnel and was kept to be stirred for 1 hour at 5°C and for over night at room temperature. This reaction mixture was filtered, and the obtained white solid was washed 2 times with 30 ml of hexane and was dried under a reduced pressure to obtain 3.0 g of white solid of 2,5-di-tert-butylpyrrolyl lithium salt. The yield was 80 %.

(1-6) Synthesis of cyclopentadienyl(2,5-di-tert-butylpyrrolyl) zirconium dichloride

After a 200ml of four-necked flask equipped with a stirrer, a dropping funnel and a thermometer was substituted with argon, 0.7g (3.9mmol) of 2,5-di-tert-butylpyrrolyl lithium salt and 50ml of toluene were fed to obtain a slurry and this was kept at -70°C. A toluene(30 ml) slurry of 1.1g (4.0 mmol) of cyclopentadienyl zirconium trichloride prepared in another flask was added slowly to the slurry previously prepared, at -70°C. This slurry was kept to be stirred and a temperature was slowly elevated from -70°C to room temperature. After elevating a temperature, a liquid was eliminated under a reduced pressure and a solid was obtained. Pentane of 50ml was added to this solid and a component soluble in pentane was extracted. By filtering the insoluble component, it was separated. By cooling the component soluble in pentane to -20°C, 160mg of a white crystal of cyclopentadienyl(2,5-di-tert-butylpyrrolyl) zirconium dichloride was obtained.
Yield was 10%.
$^1$H-NMR ($C_6D_6$) data of this white crystal was shown as follows. $\delta$ 6.634(s, 2H), 6.311 (s, 5H), 1.311(s, 18H).

(2) Polymerization of ethylene with $\alpha$-olefin

After an autoclave having an inner volume of 400 ml with a stirrer was dried under vacuum and substituted with argon, 120 ml of toluene as a solvent and 80ml of hexene-1 as $\alpha$-olefin were fed and a temperature of the reactor was elevated to 60°C. After temperature up, while regulating ethylene pressure at 6kg/cm$^2$, ethylene was fed and 0.5mmol of triisobutylaluminum was cast in after the inner system became stable. Successively, a solution wherein 2.0 $\mu$mol of cyclopentadienyl(2,5-di-tert-butylpyrrolyl) zirconium dichloride synthesized with the method illustrated above was dissolved in 5ml of toluene was cast in, and subsequently, 6.0 $\mu$mol of triphenylmethyl tetrakis(pentafluorophenyl) borate was cast in. Polymerization was performed for 20 minutes while regulating a temperature at 60°C.

As a result of polymerization, ethylene-hexene-1 copolymer having SCB of 15.4, [$\eta$] of 4.03(dl/g) was produced with a yield of $2.5 \times 10^6$g per 1mol of zirconium and 1 hour.

As described above in detail, according to the present invention, by using a catalyst system comprising (A) a transition metal compound(A) represented by the general formula (1) and an organoaluminum compound(B) or (A), (B) and a compound(C) forming an ionic complex by reacting with a transition metal compound, an olefin polymer having a high molecular weight can be prepared.

## Claims

1. A catalyst component for polymerizing an olefin, which comprises a transition metal compound (A) represented by the general formula (I):

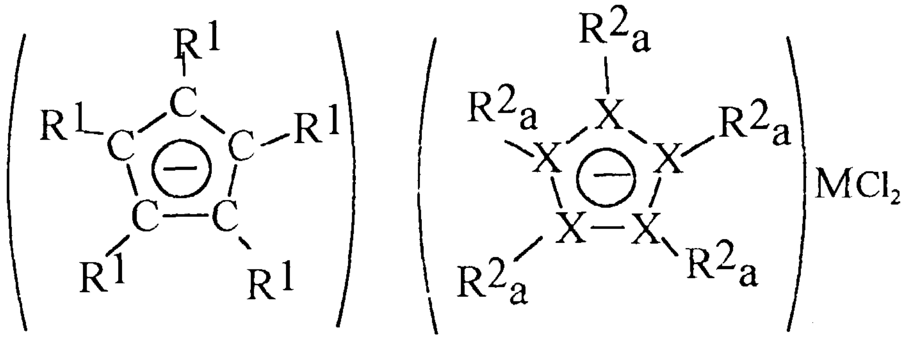 (1)

(wherein M represents a titanium or zirconium atom,

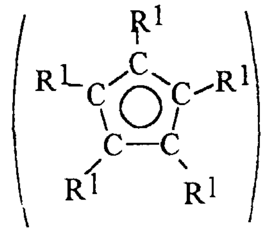

is cyclopentadienyl, methylenecyclopentadienyl, methylenetetramethylcyclopentadienyl, indenyl, methyleneindenyl, ethylenecyclopentadienyl, ethylenetetramethylcyclopentadienyl, ethyleneindenyl, dimethylmethylenecyclopentadienyl, dimethylmethylenetetramethylcyclopentadienyl, dimethylmethyleneindenyl, pentamethylcyclopentadienyl, dimethylsilylenecyclopentadienyl, dimethylsilylenetetramethylcyclopentadienyl or dimethylsilyleneindenyl,

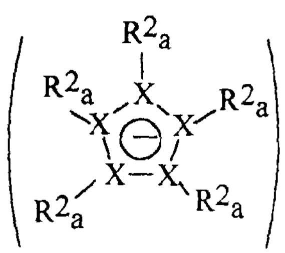

is pyrrolyl, methylpyrrolyl, dimethylpyrrolyl, trimethylpyrrolyl, tetramethylpyrrolyl, t-butylpyrrolyl, di-t-butylpyrrolyl, indolyl, methylindolyl, dimethylindolyl, t-butylindolyl or di-t-butylindolyl group);
provided that compound (A) is not (pentamethylcyclopentadienyl) (2,5-dimethylpyrrolyl) zirconium dichloride or (pentamethylcyclopentadienyl) (2,5-di-t-butylpyrrolyl) zirconium dichloride.

**2.** A catalyst component according to claim 1, wherein the transition metal compound (A) is cyclopentadienyl tetramethylpyrrolyl zirconium dichloride, cyclopentadienyl 2,5-di-t-butylpyrrolyl zirconium dichloride, ethylene(1-indenyl) (3-indolyl) titanium dichloride, ethylene (1-indenyl) (3-indolyl) zirconium dichloride or pentamethylcyclopentadienyl tetramethylpyrrolyl zirconium dichloride.

**3.** A catalyst system for polymerizing an olelfin comprising:

a transition metal compound (A) as claimed in claim 1 or 2, and an organoaluminum compound (B) selected from: (B1) organoaluminum compounds of the general formula $R^3{}_bAlZ_{3-b}$, and
(B2) cyclic aluminoxanes (B2a) of the general formula $\{-Al(R^4)-O-\}_c$ and linear aluminoxanes (B2b) of the

general formula

$$R^5\{-Al\ (R^5)-O-\}_d AlR^5_2$$

wherein each of $R^3$, $R^4$ and $R^5$ independently represents a hydrocarbon group having 1 to 8 carbon atoms, all of $R^4$ and all of $R^5$ may be the same or different; Z is a hydrogen and/or a halogen; b is a number satisfying $0<b\leqq 3$; and c and d represent an integer of 1 or more.

4. A catalyst system according to claim 3, wherein the organoaluminum compound (B1) is a trialkylaluminum compound.

5. A catalyst system according to claim 3, wherein the linear aluminoxane (B2b) is methylaluminoxane.

6. A catalyst system according to claim 3, 4 or 5 which further comprises a compound (C) which forms an ionic complex by reacting with a transition metal compound is used in addition to the transition metal compound (A) and the organoaluminium compound (B).

7. A catalyst system according to claim 6, wherein compound (C) is a boron compound.

8. A process for producing an olefin polymer which process comprises polymerising one or more olefins using a catalyst system according to any one of claims 3 to 7.

9. A process according to claim 8 wherein the olefin polymer is linear low density polyethylene.

**Patentansprüche**

1. Katalysatorbestandteil zur Polymerisation eines Olefins, umfassend eine Übergangsmetallverbindung (A) der allgemeinen Formel (I):

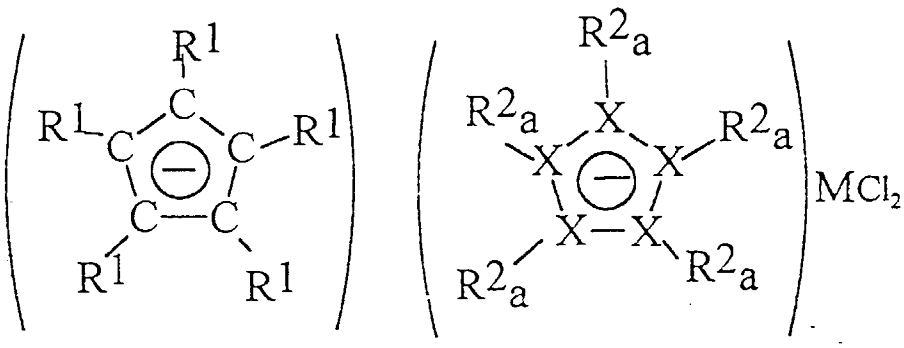

(1)

(in der M ein Titan- oder Zirkoniumatom darstellt,

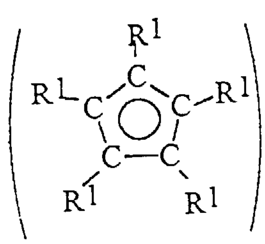

eine Cyclopentadienyl-, Methylencyclopentadienyl-, Methylentetramethylcyclopentadienyl-, Indenyl-, Methylenindenyl-, Ethylencyclopentadienyl-, Ethylentetramethylcyclopentadienyl-, Ethylenindenyl-, Dimethylmethylencyclopentadienyl-, Dimethylmethylentetramethylcyclopentadienyl-, Dimethylmethylenindenyl-, Pentamethylcyclopentadienyl-, Dimethylsilylencyclopentadienyl-, Dimethylsilylentetramethylcyclopentadienyl- oder Dimethylsilylenindenylgruppe ist,

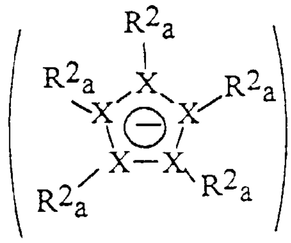

eine Pyrrolyl-, Methylpyrrolyl-, Dimethylpyrrolyl-, Trimethylpyrrolyl-, Tetramethylpyrrolyl-, tert-Butylpyrrolyl-, Di-tert-butylpyrrolyl-, Indolyl-, Methylindolyl-, Dimethylindolyl-, tert-Butylindolyl- oder Di-tert-butylindolylgruppe ist); mit der Maßgabe, daß die Verbindung (A) nicht (Pentamethylcyclopentadienyl)-(2,5-dimethylpyrrolyl)zirkoniumdichlorid oder (Pentamethylcyclopentadienyl)(2,5-di-tert-butylpyrrolyl)zirkoniumdichlorid ist.

**2.** Katalysatorbestandteil nach Anspruch 1, in der die Übergangsmetallverbindung (A) Cyclopentadienyltetramethylpyrrolylzirkoniumdichlorid, Cyclopentadienyl-2,5-di-tert-butylpyrrolylzirkoniumdichlorid, Ethylen-(1-indenyl)(3-indolyl)titandichlorid, Ethylen-(1-indenyl)(3-indolyl)zirkoniumdichlorid oder Pentamethylcyclopentadienyltetramethylpyrrolylzirkoniumdichlorid ist.

**3.** Katalysatorsystem zur Polymerisation eines Olefins, umfassend: eine Übergangsmetallverbindung (A) nach Anspruch 1 oder 2 und eine Organoaluminiumverbindung (B), ausgewählt aus:

(B1) Organoaluminiumverbindungen der allgemeinen Formel $R^3_bAlZ_{3-b}$ und
(B2) cyclischen Aluminoxanen (B2a) der allgemeinen Formel $\{-Al(R^4)-O-\}_c$ und linearen Aluminoxanen (B2b) der allgemeinen Formel

$$R^5\{-Al(R^5)-O-\}_dAlR^5_2$$

wobei jeder der Reste $R^3$, $R^4$ und $R^5$ unabhängig einen Kohlenwasserstoffrest mit 1 bis 8 Kohlenstoffatomen darstellt, alle Reste $R^4$ und alle Reste $R^5$ gleich oder verschieden sein können; Z ein Wasserstoff- und/oder ein Halogenatom ist; b eine Zahl ist, die $0 < b \leq 3$ erfüllt; und c und d eine ganze Zahl von 1 oder mehr darstellen.

**4.** Katalysatorsystem nach Anspruch 3, in dem die Organoaluminiumverbindung (B1) eine Trialkylaluminiumverbindung ist.

**5.** Katalysatorsystem nach Anspruch 3, in dem das lineare Aluminoxan (B2b) Methylaluminoxan ist.

**6.** Katalysatorsystem nach Anspruch 3, 4 oder 5, das weiter eine Verbindung (C), die einen ionischen Komplex durch Umsetzung mit einer Übergangsmetallverbindung bildet, zusätzlich zu der Übergangsmetallverbindung (A) und der Organoaluminiumverbindung (B) umfaßt.

**7.** Katalysatorsystem nach Anspruch 6, in dem die Verbindung (C) eine Borverbindung ist.

**8.** Verfahren zur Herstellung eines Olefinpolymers, wobei das Verfahren die Polymerisation eines oder mehrerer Olefine unter Verwendung eines Katalysatorsystems nach einem der Ansprüche 3 bis 7 umfaßt.

**9.** Verfahren nach Anspruch 8, wobei das Olefinpolymer lineares Polyethylen geringer Dichte ist.

## Revendications

1. Composant catalytique pour polymériser une oléfine, qui comprend un composé de métal de transition (A) représenté par la formule générale (I):

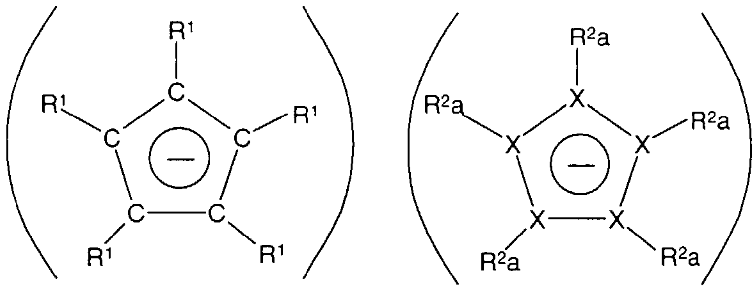 $MCl_2$ (1)

(dans laquelle M représente un atome de titane ou de zirconium,

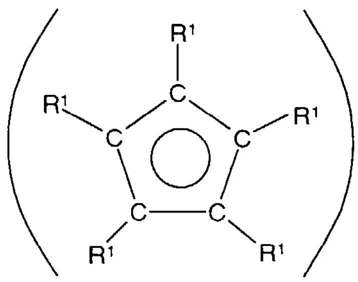

est un groupe cyclopentadiényle, méthylènecyclopentadiényle, méthylènetétraméthylcyclopentadiényle, indényle, méthylèneindényle, éthylènecyclopentadiényle, éthylènetétraméthylcyclopentadiényle, éthylèneindényle, diméthylméthylènecyclopentadiényle, diméthylméthylènetétraméthylcyclopentadiényle, diméthylméthylèneindényle, pentaméthylcyclopentadiényle, diméthylsilylènecyclopentadiényle, diméthylsilylènetétraméthylcyclopentadiényle ou diméthylsilylèneindényle,

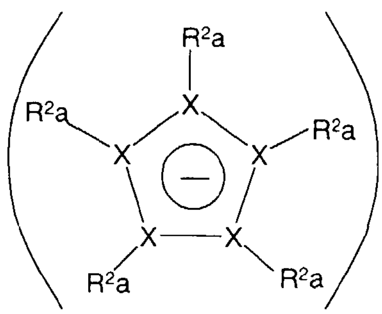

est un groupe pyrrolyle, méthylpyrrolyle, diméthylpyrrolyle, triméthylpyrrolyle, tétraméthylpyrrolyle, t-butylpyrrolyle, di-t-butylpyrrolyle, indolyle, méthylindolyle, diméthylindolyle, t-butylindolyle ou di-t-butylindolyle) ; à condition que le composé (A) ne soit pas le dichlorure de (pentaméthylcyclopentadiényl)(2,5-diméthylpyrrolyl)zirconium ou le dichlorure de (pentaméthylcyclopentadiényl)(2,5-di-t-butylpyrrolyl)zirconium.

2. Composant catalytique selon la revendication 1, dans lequel le composé de métal de transition (A) est le dichlorure de cyclopentadiényltétraméthylpyrrolylzirconium, le dichlorure de cyclopentadiényl 2,5-di-t-butylpyrrolylzirconium, le dichlorure d'éthylène (1-indényl)(3-indolyl)titane, le dichlorure d'éthylène (1-indényl)(3-indolyl)zirconium ou le

dichlorure de pentaméthylcyclopentadiényltétraméthylpyrrolylzirconium.

**3.** Système catalytique pour polymériser une oléfine comprenant :
un composé de métal de transition (A) selon la revendication 1 ou 2 et un composé d'organoaluminium (B) choisi parmi :

(B1) les composés d'organoaluminium de formule générale $R^3_bAlZ_{3-b}$, et
(B2) les aluminoxanes cycliques (B2a) de formule générale $\{-Al(R^4)-O-\}_c$ et les aluminoxanes linéaires (B2b) de formule générale

$$R^5\{-Al(R^5)-O-\}_dAlR^5_2$$

où $R^3$, $R^4$ et $R^5$ représentent chacun indépendamment un groupe hydrocarboné ayant 1 à 8 atomes de carbone, tous les $R^4$ et tous les $R^5$ peuvent être identiques ou différents ; Z est un hydrogène et/ou un halogène ; b est un nombre obéissant à $0<b\leq3$ et c et d représentent un entier de 1 ou plus.

**4.** Système catalytique selon la revendication 3, dans lequel le composé d'organoaluminium (B) est un composé de trialkylaluminium.

**5.** Système catalytique selon la revendication 3, dans lequel l'aluminoxane linéaire (B2b) est le méthylaluminoxane.

**6.** Système catalytique selon la revendication 3, 4 ou 5 qui comprend en outre un composé (C) qui forme un complexe ionique par réaction avec un composé de métal de transition et qui est utilisé en plus du composé de métal de transition (A) et du composé d'organoaluminium (B).

**7.** Système catalytique selon la revendication 6, dans lequel le composé (C) est un composé du bore.

**8.** Procédé pour produire un polymère oléfinique, lequel procédé comprend la polymérisation d'une ou plusieurs oléfines au moyen d'un système catalytique selon l'une quelconque des revendications 3 à 7.

**9.** Procédé selon la revendication 8, dans lequel le polymère oléfinique est du polyéthylène basse densité linéaire.

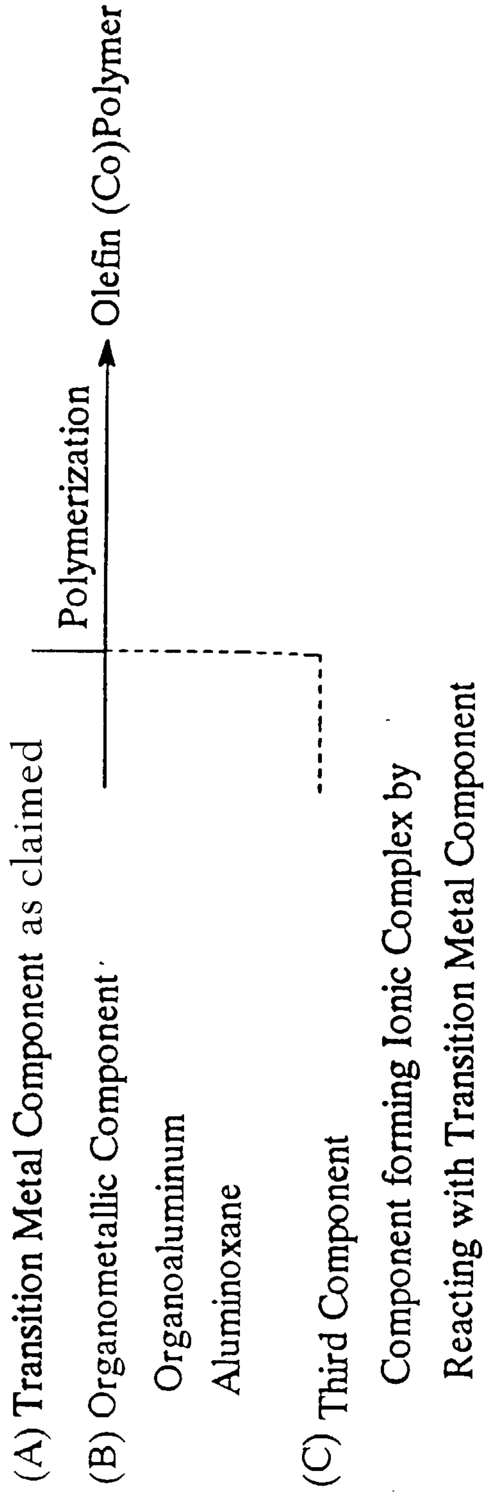
(A) Transition Metal Component as claimed
(B) Organometallic Component
Organoaluminum
Aluminoxane
(C) Third Component
Component forming Ionic Complex by
Reacting with Transition Metal Component
Polymerization
Olefin (Co)Polymer

Figure 1